# EUROPEAN PATENT APPLICATION

(11) **EP 4 199 193 A1**
(43) Date of publication of application: **21.06.2023**
(21) Application number: 22746327.0
(22) Date of filing: 24.01.2022
(51) Int. Cl.: H01M 10/6567, H01M 10/6556, H01M 10/625, H01M 10/617, H01M 10/643, H01M 50/249

(54) **BATTERY MODULE, AND BATTERY PACK AND VEHICLE COMPRISING SAME**

(30) Priority: 29.01.2021 KR 20210013637
(71) Applicant: LG Energy Solution, Ltd., Seoul 07335 (KR)
(72) Inventor: KEUM, Jong Yoon, Daejeon 34122 (KR); CHOI, Bum, Daejeon 34122 (KR); KIM, Gae Sung, Daejeon 34122 (KR); AHN, Soo Jun, Daejeon 34122 (KR); SHIN, Dong Hwan, Daejeon 34122 (KR)
(74) Representative: Plasseraud IP
(86) International application number: PCT/KR2022/095015
(87) International publication number: WO 2022/164301

(57) **Abstract**

A battery module according to a preferred example of the present invention is characterized by comprising a plurality of battery cells; a module housing that the plurality of battery cells is accommodated, and that a module inlet through which cooling water is introduced and a module outlet through which cooling water is discharged are provided; and a divider plate disposed on the module housing so that the inner space of the module housing is divided up and down along the longitudinal direction of the battery cells, thereby dividing the inner space into an upper space and a lower space, wherein the module housing is provided such that the cooling water is introduced in the longitudinal direction of the battery cells through the module inlet to flow from the upper space to the lower space or from the lower space to the upper space along the divider plate, and then is discharged along the longitudinal direction of the battery cells through the module outlet.

## Description

### [Technical Field]

The present invention relates to a battery module, and a battery pack and a vehicle including the same, which relates to, more particularly, a battery module capable of preventing deterioration of the battery module performance by reducing a temperature deviation between battery cells, and a battery pack and a vehicle including the same.

### [Background Art]

As technology development and demand for mobile devices increase, the demand for secondary batteries as an energy source rapidly increases, and a nickel cadmium battery or a hydrogen ion battery has been used as a conventional secondary battery.

However, in recent years, because the memory effect hardly occurs compared to a nickel-based secondary battery, a lithium secondary battery allowing charging and discharging freely, and having a very low self-discharge rate and high energy density has been frequently used.

Such a lithium secondary battery mainly uses a lithium-based oxide and a carbon material as a positive electrode active material and a negative electrode active material, respectively.

The lithium secondary battery is equipped with an electrode assembly in which a positive electrode plate and a negative electrode plate applied with the positive electrode active material and the negative electrode active material, respectively, are disposed with a separator interposed therebetween, and an exterior material, that is, a battery case for sealing and housing the electrode assembly together with an electrolyte.

The lithium secondary battery consists of a positive electrode, a negative electrode, and a separator interposed therebetween and an electrolyte, which is classified into a lithium secondary battery (lithium ion battery, LIB), a lithium polymer battery (polymer lithium ion battery, PLIB), and the like depending on which positive active material and negative active material are used.

Typically, these electrodes of the lithium secondary battery are formed by coating a positive electrode or negative electrode active material on a current collector such as an aluminum or copper sheet, mesh, film or foil, and then drying it.

The secondary batteries may be electrically connected to each other through a bus bar that is a conductor. In general, a positive electrode lead is made of an aluminum material, a negative electrode lead is made of a copper material, and the bus bar is also usually made of a copper material.

Here, in one example, cooling water may be used to cool battery cells provided in the battery module.

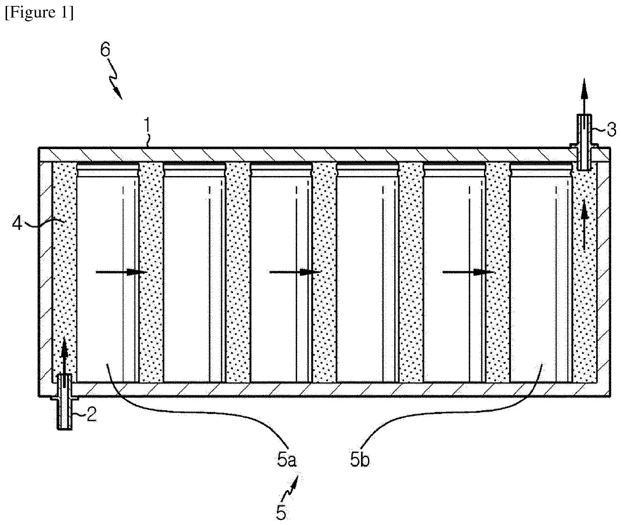

Figure 1 is a schematic cross-sectional diagram of a structure in which an inlet and an outlet for inflow and outflow of cooling water are disposed at different positions in a conventional battery module.

Referring to Figure 1, when the housing (1) is equipped with the inlet (2) and the outlet (3) in the prior art, the inlet (2) and the outlet (3) are installed at positions opposite to each other, that is, both ends.

However, referring to the arrows in Figure 1, when the cooling water (4) introduced from the inlet (2) moves toward the outlet (3) while cooling the battery cells (5), the temperature of the cooling water (4) gradually rises, so that a large temperature difference occurs between the battery cell (5a) disposed on the inlet (2) side and the battery cell (5b) disposed on the outlet (3) side.

That is, the battery cell (5a) in contact with the cooling water (4) on the side of inlet (2) with a relatively low temperature has a low temperature, and the battery cell (5b) in contact with the cooling water (4) on the side of the outlet (3) with a relatively high temperature has a high temperature.

As described above, when a temperature deviation occurs between the battery cells (5), there is a problem that the performance of the battery module (6) provided with the battery cells (5) is deteriorated.

### [Disclosure]

### [Technical Problem]

Accordingly, it is a technical problem, which is intended to be achieved by the present invention, to provide a battery module capable of preventing performance deterioration of the battery module by reducing a temperature deviation between battery cells, and a battery pack and a vehicle comprising the same.

The present invention provides a battery module capable of minimizing the energy required for cooling by optimizing the flow of cooling water when cooling thermal energy generated upon charging and discharging of a battery cell in a water-cooling manner to improve cooling performance of a battery pack, and a battery pack and a vehicle comprising the same.

### [Technical Solution]

A battery module according to a preferred example of the present invention is characterized by comprising a plurality of battery cells; a module housing that the plurality of battery cells is accommodated, and that a module inlet through which cooling water is introduced and a module outlet through which cooling water is discharged are provided; and a divider plate disposed on the module housing so that the inner space of the module housing is divided up and down along the longitudinal direction of the battery cells, thereby dividing the inner space into an upper space and a lower space, wherein the module housing is provided such that the cooling water is introduced in the longitudinal direction of the battery cells through the module inlet to flow from the upper space to the lower space or from the lower space to the upper space along the divider plate, and then is discharged along the longitudinal direction of the battery cells through the module outlet.

In a preferred example of the present invention, it is characterized in that the module inlet and the module outlet are each installed on one side of the module housing parallel to the longitudinal direction of the battery cells.

In a preferred example of the present invention, it is characterized in that the module housing is provided such that the module inlet is in communication with the upper space and the module outlet is in communication with the lower space, thereby guiding the flow of the cooling water so that the cooling water flows into the upper space in the longitudinal direction of the battery cells through the module inlet, rides the upper side of the divider plate in the longitudinal direction of the divider plate, flows from the upper space to the lower space, rides the lower side of the divider plate in the lower space, flows toward the module outlet, and is discharged through the module outlet in the longitudinal direction of the battery cells.

In a preferred example of the present invention, it is characterized in that the module inlet is installed in the module housing such that one end is exposed to the outside of the module housing and the other end is inserted into the upper space.

In a preferred example of the present invention, it is characterized in that the module outlet is installed in the module housing such that one end is exposed to the outside of the module housing and the other end is extended in the longitudinal direction of the battery cells to penetrate the divider plate and inserted into the lower space.

In a preferred example of the present invention, it is characterized in that the module housing is provided such that the module inlet is in communication with the lower space and the module outlet is in communication with the upper space, thereby guiding the flow of the cooling water so that the cooling water flows into the lower space through the module inlet, flows to the upper space via the lower space along the divider plate and is discharged through the module outlet in the upper space.

In a preferred example of the present invention, it is characterized in that the module inlet is installed in the module housing such that one end is exposed to the outside of the module housing and the other end is extended in the longitudinal direction of the battery cells to penetrate the divider plate and inserted into the lower space.

In a preferred example of the present invention, it is characterized in that the module outlet is installed in the module housing such that one end is exposed to the outside of the module housing and the other end is inserted into the upper space.

In a preferred example of the present invention, it is characterized in that the divider plate is installed in the module housing to be spaced apart from at least one side of the module housing.

In a preferred example of the present invention, it is characterized in that the module housing is provided with a first spaced part where the divider plate is spaced apart from one end of the module housing and a second spaced part where the divider plate is spaced apart from the other end of the module housing, and the first spaced part and the second spaced part are provided side by side in the longitudinal direction of the battery cells.

In a preferred example of the present invention, it is characterized in that the module housing is provided such that the module inlet and the module outlet are installed side by side at the central part of the module housing, but the module inlet is in communication with the upper space and the module outlet penetrates the diver plate to be in communication with the lower space, thereby being provided such that the cooling water flows into the upper space through the module inlet in the longitudinal direction of the battery cells, and is branched into a first flow and a second flow in both directions of the longitudinal direction of the divider plate to circulate the inner space, and then is discharged through the module outlet, wherein the first flow is a flow which is directed from the central part of the module housing to the first spaced part in the upper space, flows from the first spaced part toward the central part of the module housing in the lower space by changing the direction by the divider plate while passing through the first spaced part, and is discharged through the module outlet in the longitudinal direction of the battery cells, and the second flow is a flow, in a direction opposite to the first flow, which is directed from the central part of the module housing to the second spaced part in the upper space, flows from the second spaced part toward the central part of the module housing in the lower space by changing the direction by the divider plate while passing through the second spaced part, and is discharged through the module outlet in the longitudinal direction of the battery cells.

In a preferred example of the present invention, it is characterized in that the module housing is provided such that the module inlet and the module outlet are installed side by side at the central part of the module housing, but the module inlet penetrates the divider plate to be in communication with the lower space and the module outlet is in communication with the upper space, thereby being provided such that the cooling water flows into the lower space through the module inlet in the longitudinal direction of the battery cells, and is branched into a third flow and a fourth flow in both directions of the longitudinal direction of the divider plate to circulate the inner space, and then is discharged through the module outlet, wherein the third flow is a flow which is directed from the central part of the module housing to the first spaced part in the lower space, flows from the first spaced part toward the central part of the module housing in the upper space by changing the direction by the divider plate while passing through the first spaced part, and is discharged through the module outlet in the longitudinal direction of the battery cells, and the fourth flow is a flow, in a direction opposite to the third flow, which is directed from the central part of the module housing to the second spaced part in the lower space, flows from the second spaced part toward the central part of the module housing in the upper space by changing the direction by the divider plate while passing through the second spaced part, and is discharged through the module outlet in the longitudinal direction of the battery cells.

In a preferred example of the present invention, it is characterized in that a binding part in which the divider plate is bound to one end of the module housing is formed, and a third spaced part in which the divider plate is spaced apart from the other end of the module housing is formed.

In a preferred example of the present invention, it is characterized in that the module housing is provided such that the module inlet and the module outlet are installed side by side on one side of the module housing, but the module inlet is in communication with the upper space and the module outlet penetrates the divider plate to be in communication with the lower space, thereby guiding the flow of the cooling water so that the cooling water flows into the upper space through the module inlet, flows along the upper side of the divider plate toward the third spaced part and simultaneously flows into the lower space via the third spaced part, and flows from the third spaced part toward one side of the module housing to be discharged through the module outlet.

In a preferred example of the present invention, it is characterized in that the module housing is provided such that the module inlet and the module outlet are installed side by side on one side of the module housing, but the module inlet penetrates the divider plate to be in communication with the lower space and the module outlet is in communication with the upper space, thereby guiding the flow of the cooling water so that the cooling water flows into the lower space through the module inlet, flows along the lower side of the divider plate toward the third spaced part and simultaneously flows into the upper space via the third spaced part, and flows from the third spaced part toward one side of the module housing to be discharged through the module outlet.

In a preferred example of the present invention, it is characterized in that the module housing comprises an upper plate and a lower case, and the module inlet and the module outlet are disposed adjacent to the same portion among one end, the other end and the central part of the upper plate.

In a preferred example of the present invention, it is characterized in that it is provided such that the average temperature of the cooling water above the divider plate and the cooling water below the divider plate at any one position has a value within a range preset with the average temperature of the cooling water above the divider plate and the cooling water below the divider plate at another position.

In a preferred example of the present invention, it is characterized in that the module housing is provided with a reference surface, an inclined surface inclined at an acute angle to the reference surface, and an opposite surface facing the reference surface and connected to the inclined surface, wherein at least one module inlet is installed on the reference surface and at least one module outlet is installed on the opposite surface.

In a preferred example of the present invention, it is characterized in that while at least one battery cell is arranged in a column parallel to the reference surface and the inclined surface, respectively, it is zigzag-arranged with the battery cells arranged in an adjacent column.

In a preferred example of the present invention, it is characterized in that at least one battery cell is arranged to be spaced apart from the module housing parallel to the reference surface in a unit of rows and parallel to the inclined surface in a unit of columns.

In a preferred example of the invention, it is characterized in that the module housing has a parallelogram cross section.

In a preferred example of the present invention, it is characterized in that the module housing has a structure in which the inclined surface is inclined within a range of 30 degrees to 80 degrees with respect to the reference surface.

In a preferred example of the present invention, it is characterized in that the module inlet is provided on the reference surface, but provided to be inclined within a range of 30 degrees to 80 degrees with respect to the reference surface.

In a preferred example of the present invention, it is characterized in that the module outlet is provided to be inclined within a range of 30 degrees to 80 degrees with respect to the opposite surface.

In a preferred example of the present invention, it is characterized in that the at least one battery cell is arranged in a column along an inclined direction within a range of 30 degrees to 80 degrees with respect to the reference surface.

In a preferred example of the present invention, it is characterized by further comprising a power source in which it is connected to the module housing to circulate the cooling water in the interior space.

A battery pack according to a preferred example of the present invention is characterized in that it comprises a battery module having the structure as above.

A vehicle according to a preferred example of the present invention is characterized in that it comprises a battery module having the structure as above.

### [Effects of Invention]

Examples of the present invention have the effect capable of preventing the performance degradation of the battery module by reducing the temperature deviation between the battery cells.

When the thermal energy generated during charging and discharging of the battery cells is directly cooled in a water-cooling manner, the flow of the cooling water is optimized to improve the cooling performance of the battery pack, whereby the present invention can minimize the energy required for cooling.

### [Brief Description of Drawings]

Figure 1 is a schematic cross-sectional diagram of a structure in which a module inlet and a module outlet for inflow and outflow of cooling water are disposed at different positions in a conventional battery module.
Figures 2 to 5 are diagrams for explaining a battery module according to a first example of the present invention.

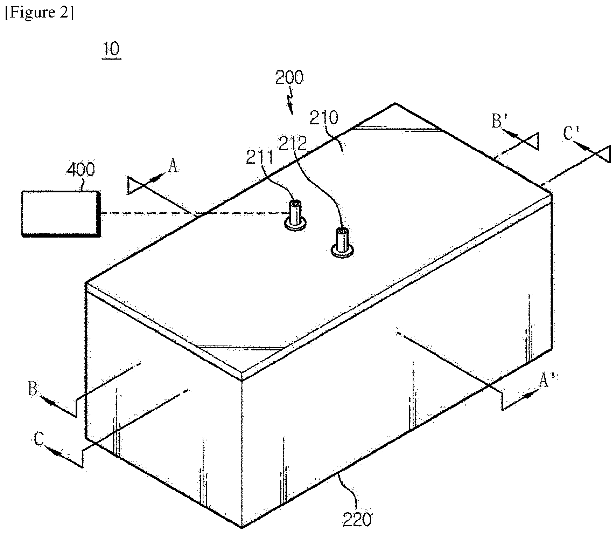

Figure 2 is an overall perspective diagram of a battery module according to a first example of the present invention.

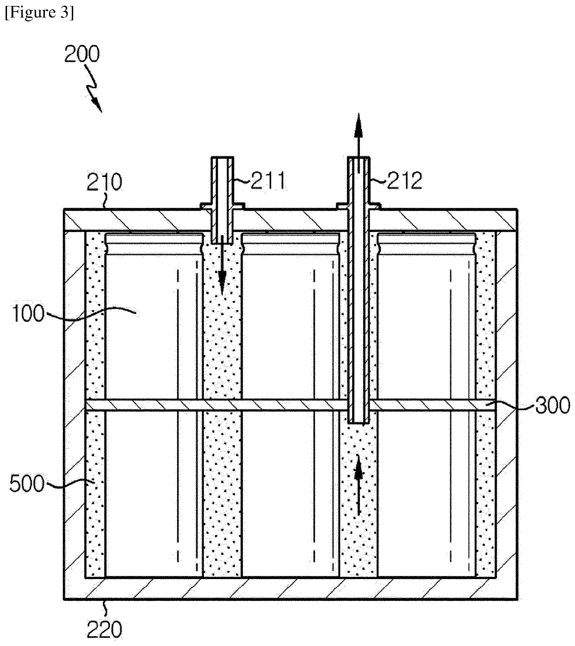

Figure 3 is a cross-sectional diagram taken along Line A-A' of Figure 2.

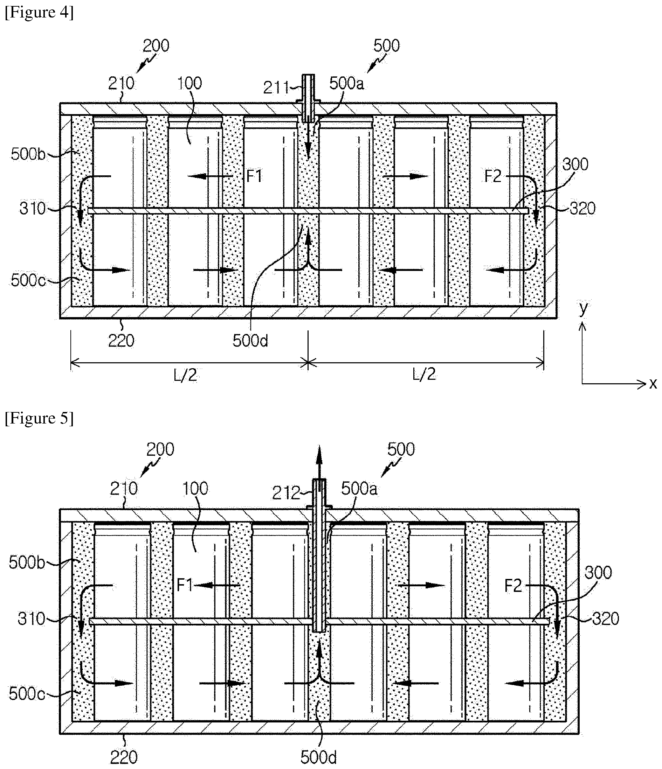

Figure 4 is a cross-sectional diagram taken along Line B-B' of Figure 2.
Figure 5 is a cross-sectional diagram taken along Line C-C' of Figure 2.

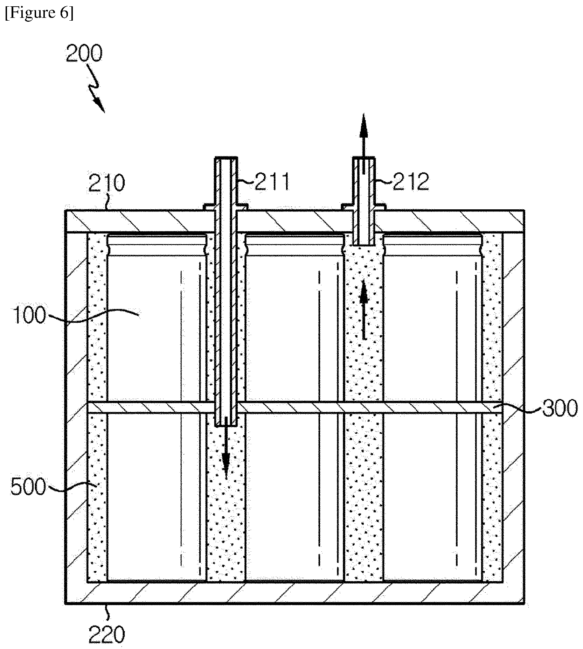

Figures 6 to 8 are diagrams for explaining a battery module according to a second example of the present invention.
Figure 6 is another example of Figure 3, which shows a difference in the positions of the module inlet and the module outlet as compared with the first example.

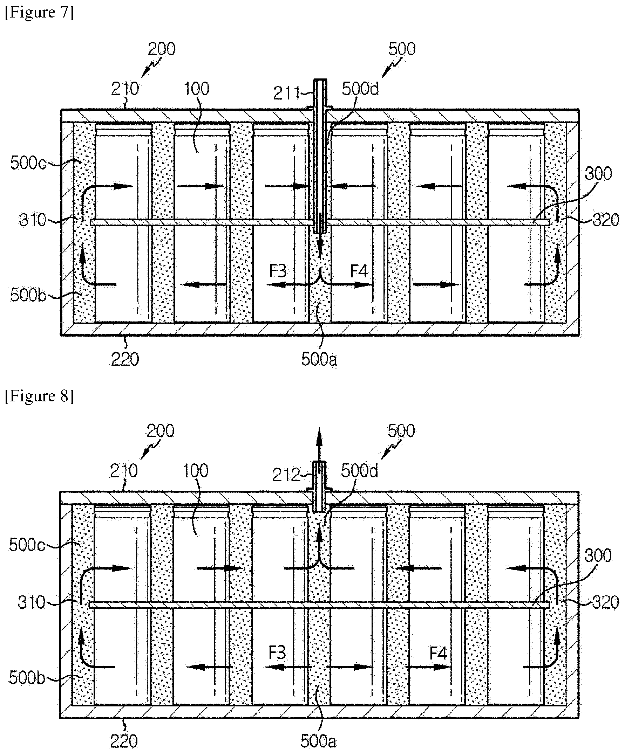

Figure 7 is a diagram corresponding to Figure 4 in relation to Figure 6.
Figure 8 is a diagram corresponding to Figure 5 in relation to Figure 6.

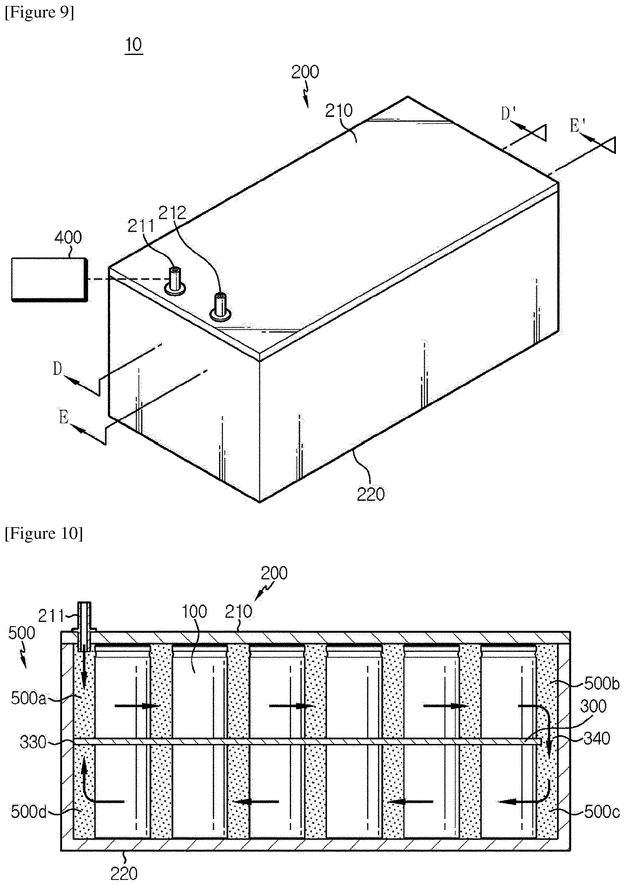

Figures 9 to 11 are diagrams for explaining a battery module according to a third example of the present invention.
Figure 9 is a schematic overall perspective diagram of a battery module according to a third example of the present invention.
Figure 10 is a cross-sectional diagram taken along Line D-D' of Figure 9.

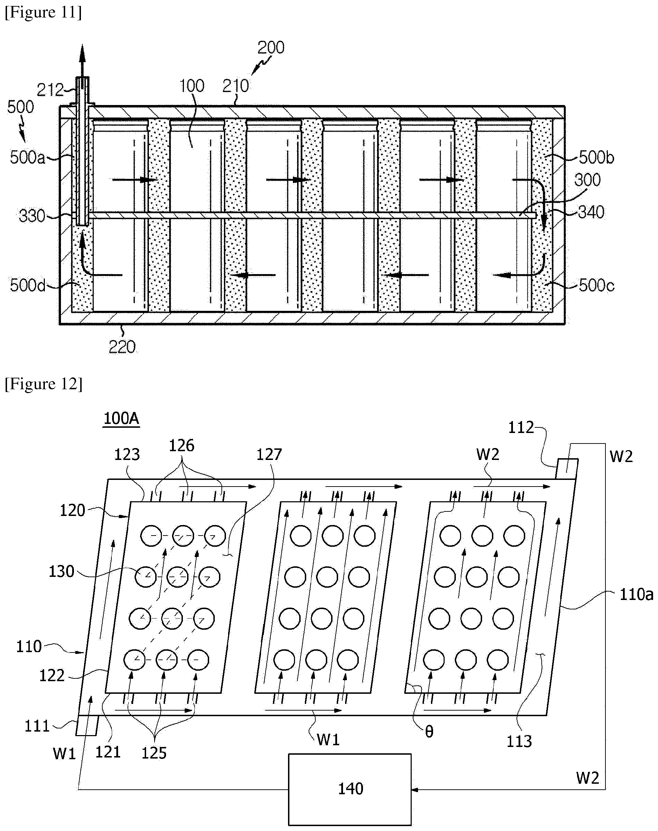

Figure 11 is a cross-sectional diagram taken along Line E-E' of Figure 9.
Figure 12 schematically illustrates a configuration diagram of a battery pack to which a battery module according to a fourth example of the present invention is applied.

### [Best Mode]

Hereinafter, the present invention will be described in detail according to preferred examples with reference to the accompanying drawings.

The terms or words used in the present specification and claims should not be construed as being limited to their ordinary or dictionary meanings, and should be interpreted as meaning and concept consistent with the technical idea of the present invention based on the principle that the inventor may properly define the concepts of the terms in order to describe his own invention in the best way.

Therefore, the constitution shown in examples and drawings described in this specification is only the most preferred one example of the present invention and does not represent all of the technical idea of the present invention, so that it should be understood that there may be various equivalents and modifications, which may be substituted for them, at the time of filing the present application.

In the drawings, the size of each component or a specific part constituting the component has been exaggerated, omitted or schematically illustrated for convenience and clarity of descriptions.

Therefore, the size of each component does not fully reflect the actual size. If it is determined that a detailed description of a related known function or configuration may unnecessarily obscure the gist of the present invention, such descriptions will be omitted.

The term 'binding' or 'connecting' as used herein also includes a case where one member and another member are directly bound or directly connected, as well as a case where one member is indirectly bound or indirectly connected to another member through a joint member.

### First Example

Referring to Figures 2 to 5, the battery module (10) according to one example of the present invention comprises a plurality of battery cells (100), a module housing (200), a divider plate (300) and a power source (400).

The battery cell (100) may have various shapes. However, in the present example, for convenience of descriptions, the battery cell (100) is mainly described in the case of a cylindrical shape, but the shape range of the battery cell (100) is not limited to the cylindrical shape.

The module housing (200) is provided to protect the battery cell (100). A plurality of battery cells (100) is arranged to be spaced apart from each other in the module housing (200).

The module housing (200) is provided with a module inlet (211) and a module outlet (212). A power source (400) is connected to the module inlet (211) and the module outlet (212). Here, the power source (400) is a device for circulating cooling water in the inner space of the module housing (200). A device such as a pump may be used as the power source (400).

The module housing (200) may consist of an upper plate (210) and a lower case (220), but is not necessarily limited thereto.

Referring to Figures 2 to 5, the module inlet (211) and the module outlet (212) are disposed at the central part of the upper plate (210). The module inlet (211) and the module outlet (212) are installed side by side on one side of the module housing (200). At this time, the central axis of the module inlet (211) and the module outlet (212) is preferably parallel to the longitudinal direction (y) of the battery cells.

Referring to Figure 3, the module inlet (211) is installed in the module housing (200) to be in communication with the upper space. The module inlet (211) is installed in the module housing (200) so that one end is exposed to the outside of the module housing (200) and the other end is inserted into the upper space.

The module outlet (212) is installed in the module housing (200) to be in communication with the lower space. Specifically, the module outlet (212) is installed in the module housing (200) so that one end is exposed to the outside of the module housing (200) and the other end is extended in the longitudinal direction (y) of the battery cells to penetrate the divider plate (300), thereby being inserted into the lower space.

The divider plate (300) is installed in the module housing (200) so that the inner space of the module housing (200) is divided up and down along the longitudinal direction (y) of the battery cells. In the module housing (200), the inner space is divided into an upper space and a lower space by the divider plate (300).

The divider plate (300) is installed in the module housing (200) in the horizontal direction so as to be spaced apart from at least one side of the module housing (200). At this time, a first spaced part (310) and a second spaced part (320) are formed between the divider plate (300) and the module housing (200).

The cooling water flows into the upper space in the longitudinal direction (y) of the battery cells through the module inlet (211). Subsequently, the cooling water rides the upper side of the divider plate (300) in the longitudinal direction (x) of the divider plate, and flows from the upper space to the lower space. Then, the cooling water rides the lower side of the divider plate (300) in the lower space, flows toward the module outlet (212), and is discharged through the module outlet (212) in the longitudinal direction (y) of the battery cells.

Referring to Figures 4 and 5, the cooling water flows into the upper space through the module inlet (211) in the longitudinal direction (y) of the battery cells, and is branched into a first flow (F1) and a second flow (F2) in both directions of the longitudinal (x) of the divider plate to circulate the inner space, and then is discharged through the module outlet (212).

Here, the first flow (F1) is a flow which is directed from the central part of the module housing (200) to the first spaced part (310) in the upper space, flows from the first spaced part (310) toward the central part of the module housing (200) in the lower space by changing the direction by the divider plate (300) while passing through the first spaced part (310), and is discharged through the module outlet (212) in the longitudinal direction (y) of the battery cells. The first flow (F1) circulates the 1/2 space (L/2) of the module housing on one side of the module housing based on the central part of the module housing.

Then, the second flow (F2) has a direction opposite to the first flow (F1). The second flow (F2) is a flow which is directed from the central part of the module housing (200) to the second spaced part (320) in the upper space, flows from the second spaced part (320) toward the central part of the module housing (200) in the lower space by changing the direction by the divider plate (300) while passing through the second spaced part (320), and is discharged through the module outlet (212) in the longitudinal direction (y) of the battery cells. The first flow (F1) circulates the remaining space (L/2) of the module housing from the other side of the module housing based on the central part of the module housing.

Referring to Figure 4, the cooling water (500a) on the upper side of the divider plate (300) from the central part of the module housing (200), into which the cooling water (500) flows, has the lowest temperature, and as it approaches both ends from the central part of the module housing (200), the cooling water (500b, 500c) has a higher and higher temperature, because the cooling water (500b, 500c) moves while cooling the battery cells (100).

Then, referring to Figure 5, the cooling water (500d) on the lower side of the divider plate (300) from the central part of the module housing (200) where the cooling water (500d) flows out has the highest temperature.

Here, in the case of the central part of the module housing (200), the lowest temperature cooling water (500a) and the highest temperature cooling water (500d) are disposed on the upper side and the lower side of the divider plate (300), respectively, so that the temperature average value of the lowest temperature cooling water (500a) and the highest temperature cooling water (500d) may have a value similar to the temperature average value of the cooling water (500b, 500c) located at both ends of the module housing (200).

Here, in the case of the central part of the module housing (200), the cooling water (500a), which is just introduced thereto to have the lowest temperature, and the cooling water (500d), which cools the battery cell (100) while circulating the inside of the module housing (200) and then has the highest temperature depending on the temperature increase, are disposed on the upper side and the lower side of the divider plate (300), respectively.

Accordingly, the temperature average value of the lowest temperature cooling water (500a) and the highest temperature cooling water (500d) may have a value similar to the temperature average value of the cooling water (500b, 500c) located at the upper side and the lower side of both ends of the module housing (200), respectively.

Here, the thickness and size of the cylindrical battery cells (100), the spacing between the cylindrical battery cells (100), the temperature of the supplied cooling water (500), and the like may be adjusted through experiments.

For example, it may be provided for the average temperature of the cooling water (500) on the upper side of the divider plate (300) and the cooling water (500) on the lower side of the divider plate (300) at one position to have a value within a range preset with, for example, the value same as or similar to the average temperature of the cooling water (500) on the upper side of the divider plate (300) and the cooling water (500) on the lower side of the divider plate (300) at another position.

That is, the average temperature of the cooling water (500) in contact with the cylindrical battery cell (100) located at the central part of the module housing (200) and the average temperature of the cooling water (500) in contact with the cylindrical battery cell (100) located at both ends of the module housing (200) may have similar values, so that the temperature deviation between the cylindrical battery cells (100) may be minimized.

### Second Example

Hereinafter, referring to Figures 6 to 8, the battery module (10) according to the second example will be described. This example has the same constitution as that of the above-described first example, but the installation structure of the module inlet (211) and the module outlet (212) is different therefrom. In this example, in order to avoid repetition of the descriptions, descriptions of the battery cell (100), the divider plate (300) and the power source (400), which are the same constitution as in the above-described first example, will be omitted.

Referring to Figure 6, the module housing (200) is provided such that the module inlet (211) is in communication with the lower space and the module outlet (212) is in communication with the upper space.

The module inlet (211) is installed in the module housing (200) such that one end is exposed to the outside of the module housing (200) and the other end is extended in the longitudinal direction (y) of the battery cells to penetrate the divider plate (300) and inserted into the lower space. Then, the module outlet (212) is installed in the module housing (200) so that one end is exposed to the outside of the module housing (200) and the other end is inserted into the upper space.

In the present example, the module housing (200) guides the flow of the cooling water so that the cooling water flows into the lower space through the module inlet (211), passes through the lower space along the divider plate (300) to flow to the upper space, and is discharged through the module outlet (212) in the upper space.

Specifically, while the cooling water flows into the lower space through the module inlet (211) in the longitudinal direction (y) of the battery cells and is branched into the third flow (F3) and the fourth flow (F4) in both directions of the longitudinal direction (x) of the divider plate to circulate the inner space, and then is discharged through the module outlet (212), the battery module (10) may cool the battery cells (100) in the longitudinal direction (y) of the battery cells.

Here, the third flow (F3) is a flow which is directed from the central part of the module housing (200) to the first spaced part (310) in the lower space, flows from the first spaced part (310) toward the central part of the module housing (200) in the upper space by changing the direction by the divider plate (300) while passing through the first spaced part (310), and is discharged through the module outlet (212) in the longitudinal direction (y) of the battery cells.

Then, the fourth flow (F4) has a direction opposite to the third flow (F3). The fourth flow (F4) is a flow which is directed from the central part of the module housing (200) to the second spaced part (320) in the lower space, flows from the second spaced part (320) toward the central part of the module housing (200) in the upper space by changing the direction by the divider plate (300) while passing through the second spaced part (320), and is discharged through the module outlet (212) in the longitudinal direction (y) of the battery cells.

Referring to Figure 7, the cooling water (500a) on the lower side of the divider plate (300) from the central part of the module housing (200), into which the cooling water (500) flows, has the lowest temperature, and as it approaches both ends from the central part of the module housing (200), the cooling water (500b, 500c) has a higher and higher temperature, because the cooling water (500b, 500c) moves while cooling the battery cells (100).

Then, referring to Figure 8, the cooling water (500d) on the upper side of the divider plate (300) from the central part of the module housing (200) where the cooling water (500d) flows out has the highest temperature.

Here, in the case of the central part of the module housing (200), the lowest temperature cooling water (500a) and the highest temperature cooling water (500d) are disposed on the lower side and the upper side of the divider plate (300), respectively, so that the temperature average value of the lowest temperature cooling water (500a) and the highest temperature cooling water (500d) may have a value similar to the temperature average value of the cooling water (500b, 500c) located at both ends of the module housing (200).

The average temperature of the cooling water (500) in contact with the cylindrical battery cell (100) located at the central part of the module housing (200) and the average temperature of the cooling water (500) in contact with the cylindrical battery cell (100) located at both ends of the module housing (200) may have similar values, so that the temperature deviation between the cylindrical battery cells (100) may be minimized.

### Third Example

Hereinafter, referring to Figures 9 to 11, the third example of the present invention will be described. However, the descriptions common to the parts described in the battery module (10) according to the first example of the present invention are replaced with the above-described explanation.

Referring to Figures 9 to 11, it is different from the first example, in which both the module inlet (211) and the module outlet (212) are located in the central part of the upper plate (210), in that both the module inlet (211) and the module outlet (212) are located at one end of the upper plate (210). Although not shown in the drawings, it may also be provided for both the module inlet (211) and the module outlet (212) to be positioned at the other end of the upper plate (210).

Referring to Figures 10 and 11, the divider plate (300) may be installed in the horizontal direction at an intermediate portion of the module housing (200) in the height direction. At this time, one end of the divider plate (300) and one end of the module housing (200) are bound to each other to form a binding part (330), and the other end of the divider plate (300) and the other end of the module housing (200) are spaced apart from each other to form a third spaced part (340).

That is, the binding part (330) is formed such that the divider plate (300) is bound to one end of the module housing (200), and the third spaced part (340) is formed such that the divider plate (300) is spaced apart from the other end of the module housing (200).

Referring to Figures 9 and 10, the module inlet (211) and the module outlet (212) are located on the upper plate (210) in the portion where the binding part (330) is formed, and the cooling water (500) introduced into one end of the module housing (200) through the module inlet (211) of the upper plate (210) moves from the upper side of the divider plate (300) to the other end of the module housing (200).

Then, the cooling water (500) moved to the other end of the module housing (200) moves to the lower side of the divider plate (300) through the third spaced part (340). Then, referring to Figure 11, the cooling water (500) moves from the lower side of the divider plate (300) to one end of the module housing (200) to flow out through the module outlet (212).

Even when the module inlet (211) and the module outlet (212) are located on the upper plate (210) in the forming portion of the binding part (330) as in Figure 9, it may also be provided such that the cooling water (500) introduced into one end of the module housing (200) through the module inlet (211) of the upper plate (210) moves from the lower side of the divider plate (300) to the other end of the module housing (200), moves from the other end of the module housing (200) to the upper side of the divider plate (300) through the third spaced part (340), and moves from the upper side of the divider plate (300) to one end of the module housing (200) to flow out through the module outlet (212).

Referring to Figures 10 and 11, the cooling water (500a) on the upper side of the divider plate (300) from one end of the module housing (200), into which the cooling water (500a) flows, has the lowest temperature, and as it approaches the other end from one end of the module housing (200), the cooling water (500b, 500c) has a higher and higher temperature, because the cooling water (500) moves while cooling the battery cells (100). Then, the cooling water (500d) on the lower side of the divider plate (300) from one end of the module housing (200) where the cooling water (500d) flows out has the highest temperature.

Here, in the case of one end of the module housing (200), the lowest temperature cooling water (500a) and the highest temperature cooling water (500d) are disposed on the lower side and the upper side of the divider plate (300), respectively, so that the temperature average value of the lowest temperature cooling water (500a) and the highest temperature cooling water (500d) may have a value similar to the temperature average value of the cooling water (500b, 500c) located at both ends of the module housing (200).

That is, referring back to Figures 10 and 11, in the case of one end of the module housing (200), the cooling water (500a), which is just introduced thereto to have the lowest temperature, and the cooling water (500d), which cools the battery cell (100) while circulating the inside of the module housing (200) and then has the highest temperature depending on the temperature increase, are disposed on the upper side and the lower side of the divider plate (300), respectively.

Therefore, the temperature average value of the lowest temperature cooling water (500a) and the highest temperature cooling water (500d) may have a value similar to the temperature average value of the cooling water (500b, 500c) located at the upper side and the lower side of the other end of the module housing (200), respectively. Accordingly, there is an effect that the temperature deviation between the cylindrical battery cells (100) is minimized.

Meanwhile, the battery pack (not shown) according to the present preferred example may comprise one or more battery modules (10) according to any one of the first to third examples of the present invention as described above.

In addition, the battery pack (not shown) may further comprise, in addition to such a battery module (10), a case for accommodating such a battery module (10), various devices for controlling the charging and discharging of the battery module (10), such as BMS, a current sensor, a fuse, and the like.

Meanwhile, a vehicle (not shown) according to the preferred example of the present invention may comprise the battery module (10) or the battery pack (not shown) as described above, wherein the battery pack (not shown) may comprise the battery module (10).

In addition, the battery module (10) according to the present example may be applied to the vehicle (not shown), for example, a predetermined vehicle (not shown) provided to use electricity, such as an electric vehicle or a hybrid vehicle.

### Fourth Example

Referring to Figure 12, the battery pack (100A) according to the present example comprises a pack housing (110a), at least one battery module (120) and a power source (140).

At least one battery module (120) is accommodated in the pack housing (110a). The pack housing (110a) may have a shape corresponding to the battery module (120).

The pack housing (110a) is provided with a pack inlet (111) and a pack outlet (112). The power source (140) is connected to the pack inlet (111) and the pack outlet (112). The power source (140) supplies the cooling water to the pack housing (110a) through the pack inlet (111) and recovers the cooling water through the pack outlet (112) to form a circulation path of the cooling water with respect to the pack housing (110a).

The battery module (120) is arranged to be spaced apart from the pack housing (110a) such that the module inlet (125) faces the pack inlet (111), the module outlet (126) faces the pack outlet (112), and the pack flow path (113) connects the pack inlet (111) and the pack outlet (112).

The module housing (120a) has a reference surface (121) and an inclined surface (122) inclined at a predetermined angle with respect to the reference surface (121). In one example, the module housing (120a) has a cylindrical structure with a parallelogram cross section. The module housing (120a) may have a structure in which the inclined surface (122) is inclined within a range of 30 degrees to 80 degrees with respect to the reference surface (121).

In the module housing (120a), the divider plate (not marked with a reference numeral) according to the first example as described above is installed. The divider plate (not marked with a reference numeral) divides the inner space of the module housing (120a) up and down along the longitudinal direction of the battery cells. The divider plate (not shown) is installed to be spaced apart from at least one side of the module housing. Any one of the first to third examples as described above may be applied to the installation structure of the divider plate (not shown).

The module inlet (125) is provided parallel to the inclined surface (122) on one side of the module housing (120a) where the reference surface (121) is provided. The module inlet (125) is provided on the reference surface (121), but is provided to be inclined within the range of 30 degrees to 80 degrees with respect to the reference surface (121).

The module outlet (126) is provided to be parallel to the inclined surface (122) on the other side of the module housing (120a), but to have a different height from the module inlet (125). Here, the module outlet (126) is provided on the opposite surface (123) facing parallel to the reference surface (121), but is provided to be inclined within the range of 30 degrees to 80 degrees with respect to the opposite surface (123).

While at least one battery cell (130) is arranged in a column parallel to the reference surface (121) and the inclined surface (122), respectively, it is zigzag-arranged with the battery cells (130) arranged in an adjacent column.

At least one battery cell (130) is arranged to be spaced apart parallel to the reference surface (121) of the module housing (120a) in a unit of rows, and arranged to be spaced apart parallel to the inclined surface (122) of the module housing (120a) in a unit of columns.

The at least one battery cell (130) may be arranged in a column along an inclined direction within a range of 30 degrees to 80 degrees with respect to the reference surface (121). At this time, it is preferable that at least one battery cell (130) each arranged in a column is arranged parallel to the inclined surface (122).

When the power source (140) is operated, the cooling water (W1) flows into the pack housing (110a) through the pack inlet (111), and flows into the module inlet (125) of each battery module (120) while flowing along the pack flow path (113).

The cooling water (W1) introduced into the battery module (120) exchanges heat with the battery cell (130), while riding the side of the battery cell (130) along the longitudinal direction of the battery cells and flowing through the module flow path (127).

As the heat-exchanged cooling water (W2) is discharged from the battery module (120) to the pack flow path (113) through the module outlet (126) and discharged from the pack housing (110a) through the pack outlet (112) while flowing along the pack flow path (113), it is possible to cool the battery cells (130) and the battery module (120).

In the present invention, the module inlet (125) and the module outlet (126) are provided such that the cooling water (W1) flows in a direction parallel to the arrangement direction of the battery cells (130), whereby it is possible to minimize the frictional resistance applied to the battery cell (130) at the time of inflow and discharge of the cooling water (W1) into the module housing (120a).

That is, the present invention can cool the battery cells (130) through such a structure, while the cooling water flows into each battery module (120) and flows along each side of the battery cells (130). Accordingly, the present invention can improve the cooling performance of the battery pack (110) by minimizing the temperature deviation between the battery cells (130).

The present invention will be described specifically with reference to the following examples. However, the scope of the present invention is not limited by the following examples. The preferred examples of the present invention as described above are disclosed for the purpose of illustration, and various modifications, changes and additions can be made by those skilled in the art having ordinary knowledge of the present invention within the spirit and scope of the present invention, and such modifications, changes and additions should be considered to fall within the scope of the following claims.

## Claims

1. A battery module, **characterized by** comprising a plurality of battery cells;
a module housing that the plurality of battery cells is accommodated, and that a module inlet through which cooling water is introduced and a module outlet through which cooling water is discharged are provided;
and a divider plate disposed on the module housing so that the inner space of the module housing is divided up and down along the longitudinal direction of the battery cells, thereby dividing the inner space into an upper space and a lower space,
wherein the module housing is provided such that the cooling water is introduced in the longitudinal direction of the battery cells through the module inlet to flow from the upper space to the lower space or from the lower space to the upper space along the divider plate, and then is discharged along the longitudinal direction of the battery cells through the module outlet.

2. The battery module according to claim 1, **characterized in that**
the module inlet and the module outlet are each installed on one side of the module housing parallel to the longitudinal direction of the battery cells.

3. The battery module according to claim 2, **characterized in that**
the module housing is provided such that the module inlet is in communication with the upper space and the module outlet is in communication with the lower space,
thereby guiding the flow of the cooling water so that the cooling water flows into the upper space in the longitudinal direction of the battery cells through the module inlet, rides the upper side of the divider plate in the longitudinal direction of the divider plate, flows from the upper space to the lower space,
rides the lower side of the divider plate in the lower space, flows toward the module outlet, and is discharged through the module outlet in the longitudinal direction of the battery cells.

4. The battery module according to claim 3, **characterized in that**
the module inlet is installed in the module housing such that one end is exposed to the outside of the module housing and the other end is inserted into the upper space.

5. The battery module according to claim 3, **characterized in that**
the module outlet is installed in the module housing such that one end is exposed to the outside of the module housing and the other end is extended in the longitudinal direction of the battery cells to penetrate the divider plate and inserted into the lower space.

6. The battery module according to claim 2, **characterized in that**
the module housing is provided such that the module inlet is in communication with the lower space and the module outlet is in communication with the upper space,
thereby guiding the flow of the cooling water so that the cooling water flows into the lower space through the module inlet, flows to the upper space via the lower space along the divider plate and is discharged through the module outlet in the upper space.

7. The battery module according to claim 6, **characterized in that**
the module inlet is installed in the module housing such that one end is exposed to the outside of the module housing and the other end is extended in the longitudinal direction of the battery cells to penetrate the divider plate and inserted into the lower space.

8. The battery module according to claim 6, **characterized in that**
the module outlet is installed in the module housing such that one end is exposed to the outside of the module housing and the other end is inserted into the upper space.

9. The battery module according to claim 1, **characterized in that**
the divider plate is installed in the module housing to be spaced apart from at least one side of the module housing.

10. The battery module according to claim 9, **characterized in that**
the module housing is provided with a first spaced part where the divider plate is spaced apart from one end of the module housing and
a second spaced part where the divider plate is spaced apart from the other end of the module housing, and
the first spaced part and the second spaced part are provided side by side in the longitudinal direction of the battery cells.

11. The battery module according to claim 10, **characterized in that**
the module housing is provided such that the module inlet and the module outlet are installed side by side at the central part of the module housing, but the module inlet is in communication with the upper space and the module outlet penetrates the diver plate to be in communication with the lower space,
thereby being provided such that the cooling water flows into the upper space through the module inlet in the longitudinal direction of the battery cells, and is branched into a first flow and a second flow in both directions of the longitudinal direction of the divider plate to circulate the inner space, and then is discharged through the module outlet,
wherein the first flow is a flow which is directed from the central part of the module housing to the first spaced part in the upper space, flows from the first spaced part toward the central part of the module housing in the lower space by changing the direction by the divider plate while passing through the first spaced part, and is discharged through the module outlet in the longitudinal direction of the battery cells, and
the second flow is a flow, in a direction opposite to the first flow, which is directed from the central part of the module housing to the second spaced part in the upper space, flows from the second spaced part toward the central part of the module housing in the lower space by changing the direction by the divider plate while passing through the second spaced part, and is discharged through the module outlet in the longitudinal direction of the battery cells.

12. The battery module according to claim 10, **characterized in that**
the module housing is provided such that the module inlet and the module outlet are installed side by side at the central part of the module housing, but the module inlet penetrates the divider plate to be in communication with the lower space and the module outlet is in communication with the upper space,
thereby being provided such that the cooling water flows into the lower space through the module inlet in the longitudinal direction of the battery cells, and is branched into a third flow and a fourth flow in both directions of the longitudinal direction of the divider plate to circulate the inner space, and then is discharged through the module outlet,
wherein the third flow is a flow which is directed from the central part of the module housing to the first spaced part in the lower space, flows from the first spaced part toward the central part of the module housing in the upper space by changing the direction by the divider plate while passing through the first spaced part, and is discharged through the module outlet in the longitudinal direction of the battery cells, and
the fourth flow is a flow, in a direction opposite to the third flow, which is directed from the central part of the module housing to the second spaced part in the lower space, flows from the second spaced part toward the central part of the module housing in the upper space by changing the direction by the divider plate while passing through the second spaced part, and is discharged through the module outlet in the longitudinal direction of the battery cells.

13. The battery module according to claim 9, **characterized in that**
a binding part in which the divider plate is bound to one end of the module housing is formed, and
a third spaced part in which the divider plate is spaced apart from the other end of the module housing is formed.

14. The battery module according to claim 13, **characterized in that**
the module housing is provided such that the module inlet and the module outlet are installed side by side on one side of the module housing, but the module inlet is in communication with the upper space and the module outlet penetrates the divider plate to be in communication with the lower space,
thereby guiding the flow of the cooling water so that the cooling water flows into the upper space through the module inlet, flows along the upper side of the divider plate toward the third spaced part and simultaneously flows into the lower space via the third spaced part, and flows from the third spaced part toward one side of the module housing to be discharged through the module outlet.

15. The battery module according to claim 13, **characterized in that**
the module housing is provided such that the module inlet and the module outlet are installed side by side on one side of the module housing, but the module inlet penetrates the divider plate to be in communication with the lower space and the module outlet is in communication with the upper space,
thereby guiding the flow of the cooling water so that the cooling water flows into the lower space through the module inlet, flows along the lower side of the divider plate toward the third spaced part and simultaneously flows into the upper space via the third spaced part, and flows from the third spaced part toward one side of the module housing to be discharged through the module outlet.

16. The battery module according to claim 1, **characterized in that**
the module housing comprises an upper plate and a lower case, and
the module inlet and the module outlet are disposed adjacent to the same portion among one end, the other end and the central part of the upper plate.

17. The battery module according to claim 1, **characterized in that**
it is provided such that the average temperature of the cooling water above the divider plate and the cooling water below the divider plate at any one position has a value within a range preset with the average temperature of the cooling water above the divider plate and the cooling water below the divider plate at another position.

18. The battery module according to claim 1, **characterized in that**
the module housing is provided with a reference surface, an inclined surface inclined at an acute angle to the reference surface, and an opposite surface facing the reference surface and connected to the inclined surface,
wherein the at least one module inlet is installed on the reference surface and the at least one module outlet is installed on the opposite surface.

19. The battery module according to claim 18, **characterized in that**
while the at least one battery cell is arranged in a column parallel to the reference surface and the inclined surface, respectively, it is zigzag-arranged with the battery cells arranged in an adjacent column.

20. The battery module according to claim 18, **characterized in that**
the at least one battery cell is arranged to be spaced apart from the module housing parallel to the reference surface in a unit of rows and parallel to the inclined surface in a unit of columns.

21. The battery module according to claim 18, **characterized in that**
the module housing has a parallelogram cross section.

22. The battery module according to claim 18, **characterized in that**
the module housing has a structure in which the inclined surface is inclined within a range of 30 degrees to 80 degrees with respect to the reference surface.

23. The battery module according to claim 18, **characterized in that**
the module inlet is provided on the reference surface, but provided to be inclined within a range of 30 degrees to 80 degrees with respect to the reference surface.

24. The battery module according to claim 18, **characterized in that**
the module outlet is provided to be inclined within a range of 30 degrees to 80 degrees with respect to the opposite surface.

25. The battery module according to claim 18, **characterized in that**
the at least one battery cell is arranged in a column in an inclined direction within a range of 30 degrees to 80 degrees with respect to the reference surface.

26. The battery module according to claim 1, **characterized by** further comprising
a power source in which it is connected to the module housing to circulate the cooling water in the interior space.

27. A battery pack comprising the battery module according to any one of claims 1 to 26.

28. A vehicle comprising the battery module according to any one of claims 1 to 26.
